# EUROPÄISCHE PATENTSCHRIFT

(11) **EP 2 848 787 B1**
(45) Veröffentlichungstag und Bekanntmachung des Hinweises auf die Patenterteilung: **05.04.2017**
(21) Anmeldenummer: 14001702.1
(22) Anmeldetag: 14.05.2014
(51) Int. Cl.: F01P 3/08

(54) **Steuerventil für eine Schmiermitteldüse**
Control valve for a lubricant nozzle
Soupape de commande pour une buse de lubrifiant

(30) Priorität: 11.09.2013 DE 102013014930
(43) Veröffentlichungstag der Anmeldung: 18.03.2015
(73) Patentinhaber: MAN Truck & Bus AG, 80995 München (DE)
(72) Erfinder: Schneider, Thomas, 90547 Stein (DE)
(74) Vertreter: v. Bezold & Partner Patentanwälte - PartG mbB

(56) Entgegenhaltungen:
- EP-A2- 1 728 981
- EP-A2- 2 213 851
- DE-A1- 10 261 180
- DE-A1-102010 023 876
- GB-A- 2 431 219
- US-A1- 2013 019 834

## Beschreibung

Die Erfindung betrifft ein Steuerventil für eine Schmiermitteldüse, insbesondere für eine Ölspritzdüse, zum Kühlen eines Kolbens einer Verbrennungskraftmaschine. Die Erfindung betrifft ferner eine Schmiermitteldüse und eine Schmiermittelversorgungseinrichtung für eine Hubkolbenmaschine eines Kraftfahrzeugs.

Aus dem Stand der Technik ist bekannt, dass Ölspritzdüsen zur Kolbenkühlung eingesetzt werden. Hierbei wird das Öl über die Düse gegen die zu kühlenden Stellen des Kolbens gespritzt. Mittels eines Ventils kann dabei je nach Bauart und Auslegung in Abhängigkeit von unterschiedlichen Parametern die Ölversorgung über die Ölspritzdüse gesteuert werden. Bei einem derartigen Ventil findet beispielsweise eine Verschiebung eines federbelasteten Regelkolbens statt, wodurch eine Öffnung freigegeben wird, durch welche das Öl dann über die Düse zum Kolben gelangen kann. Aus der DE 102 61 180 A1 ist ein gattungsgemäßes Ventil für Schmiermittelkanäle von Kraftfahrzeugen mit einem einer Steueröffnung zugeordneten Steuerteil bekannt, das über mindestens ein erstes Stellteil in mindestens einer die Steueröffnung verschließenden Endlage innerhalb eines Ventilgehäuses vorgespannt und über mindestens ein zweites Stellteil in eine geöffnete Stellung bringbar ist. Dabei verläuft die durch das Schmiermittel über die Steueröffnung auf das Steuerteil wirkende Druckkraft senkrecht zur Bewegungsrichtung des Steuerteils. Durch die Tatsache, dass die durch das Schmiermittel über die Steueröffnung auf das Steuerteil wirkende Druckkraft senkrecht zur Bewegung des Steuerteiles wirkt, können das erste und das zweite Stellteil entsprechend klein ausgebildet werden.

Die DE 10 2010 023 876 A1 offenbart ein Steuerventil mit wenigstens zwei Stellteilen, mittels welchen ein Steuerteil zwischen zumindest zwei Stellungen bewegbar ist, wobei zumindest eines der Stellteile zum Bewegen des Steuerteils zwischen den Stellungen elektrisch betätigbar ist.

Die EP 2 213 851 A2 offenbart eine Ölversorgungseinrichtung zum Schmieren eines Zylinders und/oder zum Kühlen eines Kolbens, wobei die Ölversorgungseinrichtung so ausgebildet ist, dass eine Schmierung des Zylinders ständig erfolgt, während die Kühlung des Kolbens zuschaltbar ist, und/oder dass die Schmierung des Zylinders bereits bei einem geringeren Öldruck erfolgt, bei welchem noch keine Kühlung des Kolbens stattfindet.

Aus der GB 2 431 219 A ist ein Ölkühlsystem für einen Kolben mit zwei Düsen offenbart, umfassend eine erste Düse, die im Betrieb Öl an eine Unterseite des Kolbens spritzt, und eine zweite Düse, die im Betrieb Öl direkt in eine Zylinderbohrung spritzen kann, in der der Kolben hin- und hergeführt ist. Ein Steuerventil ist bereitgestellt, um zumindest eine der Düsen auszuschalten, während die andere noch in Betrieb ist.

Aus der US 2013/019834 A1 ist eine Ölspritzeinrichtung bekannt, die ebenfalls zwei Spritzdüsen umfasst. Hierbei ist ein Steuermechanismus vorgesehen, über den die erste Düse geöffnet werden kann und die zweite Düse geschlossen werden kann, wenn der Öldruck unter einem Schwellenwert ist. Ferner wird die zweite Düse geöffnet und die erste Düse geschlossen, wenn der Öldruck am oder über dem Schwellenwert ist.

Nachteilig an den aus dem Stand der Technik bekannten Ventilen für Ölspritzdüsen ist, dass diese nicht in allen Betriebssituationen eine bedarfsgerechte Versorgung und Kühlung des Kolbens mit dem Schmiermittel ermöglichen.

Eine Aufgabe der Erfindung ist es, ein Steuerventil für eine Schmiermitteldüse, insbesondere für eine Ölspritzdüse zum Kühlen eines Kolbens einer Verbrennungskraftmaschine bereitzustellen, das Nachteile herkömmlicher Steuerventile vermeidet. Das Steuerventil soll insbesondere ein bedarfsgerechtes Öffnen und Schließen des Steuerventils ermöglichen.

Diese Aufgaben werden jeweils durch ein Steuerventil für eine Schmiermitteldüse zum Kühlen eines Kolbens einer Verbrennungskraftmaschine mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die Erfindung beruht auf der Erkenntnis, dass eine nicht bedarfsgerechte Versorgung der Kolben mit Schmiermittel bei den bekannten Schmiermittelspritzdüsen dadurch verursacht werden kann, dass eine zu große Kühlölmenge bei Volllast zu Staueffekten im Kolbenkühlkanal führen kann. Bei Auftreten derartiger Staueffekte kann nachfolgend zugeführtes Schmiermittel nicht mehr in ausreichendem Maße ins Kolbeninnere geführt werden, was zu einer unzureichenden Kolbenkühlung führt. Zu klein gestaltete Ölspritzdüsen können wiederum dazu führen, dass der Kolben bei niedrigen Drehzahlen mit unzureichend viel Öl versorgt wieder. Mit der Erfindung können diese Effekte vermieden werden.

Die Erfindung umfasst deshalb die allgemeine technische Lehre, dass in einem oberen Motordrehzahlbereich bzw. bei hohen Drücken des zugeführten Schmiermittels das Steuerventil einen Öffnungsquerschnitt, über welchen das Schmiermittel der Schmiermittelspritzdüse zugeführt wird, im Vergleich zu einem mittleren Motordrehzahlbereich bzw. mittleren Drücken des zugeführten Schmiermittels reduziert, um die Schmiermittelzuführung zu drosseln. Dadurch können Staueffekte zuverlässig vermieden werden.

Das erfindungsgemäße Steuerventil für eine Schmiermitteldüse zum Kühlen eines Kolbens einer Verbrennungskraftmaschine weist in Übereinstimmung mit dem Stand der Technik wenigstens eine von Schmiermittel durchströmbare Durchtrittsöffnung auf. Die Durchtrittsöffnung ist nach außen offen, so dass aus der Durchtrittsöffnung austretendes Schmiermittel beispielsweise über eine Zuführleitung an die Schmiermittelspritzdüse weitergeleitet werden kann. Das Steuerventil umfasst ferner ein in eine jeweilige Bewegungsrichtung bewegbares Steuerteil, das in Abhängigkeit seiner Stellung einen Öffnungsquerschnitt mit der Durchtrittsöffnung zur zumindest bereichsweisen Freigabe bzw. zur Verschließung der Durchtrittsöffnung bildet.

Das Steuerventil umfasst ferner ein Stellteil, mittels welchem das Steuerteil in Abhängigkeit von einem Druck des Schmiermittels im Schmiermittelzulauf zwischen zumindest einer ersten Stellung bei einem erstem Druck, einer zweiten Stellung bei einem zweiten Druck und einer dritten Stellung bei einem dritten Druck des Schmiermittels bewegbar ist. Hierbei ist der zweite Druck größer als der erste Druck und kleiner als der dritte Druck. Der Druck des Schmiermittels ist der Schmiermitteldruck im Schmiermittelzulauf am Eingang des Steuerventils. Das Schmiermittel wird über eine Pumpe, die typischerweise an die Drehzahl des Motors gekoppelt ist, zum Steuerventileingang befördert, so dass der Schmiermitteldruck stromauf des Steuerventils mit zunehmender Motordrehzahl ansteigt. Als Schmiermittel kann Öl verwendet werden, so dass nachfolgend auch wiederholt die Begriffe Öl und Ölspritzdüse alternativ zu den Begriffen Schmiermittel und Schmiermittelspritzdüse verwendet werden.

Gemäß allgemeinen Gesichtspunkten der Erfindung ist der in der zweiten Stellung gebildete Öffnungsquerschnitt größer als die Öffnungsquerschnitte in der ersten Stellung und der dritten Stellung. Auf diese Weise kann eine bedarfsgerechte, motordrehzahlabhängige Kühlmittelversorgung des Kolbens unter Vermeidung von Staueffekten realisiert werden. So kann beispielsweise bei einer Leerlaufdrehzahl oder in einem unteren Drehzahlbereich, wo kein oder nur ein geringer Kühlölbedarf besteht, das Steuerteil in die erste Stellung bewegt werden, um die Durchtrittsöffnung zu verschließen oder um nur einen geringen Öffnungsquerschnitt freizugeben. Zu klein gestaltete Ölspritzdüsen können wiederum dazu führen, dass der Kolben bei niedrigen Drehzahlen mit unzureichend viel Öl versorgt wieder. Mit der Erfindung können diese Effekte vermieden werden. Im mittleren Drehzahlbereich kann das Steuerteil in der zweiten Stellung einen großen, vorzugsweise maximalen Öffnungsquerschnitt mit der Durchtrittsöffnung ausbilden. In einem hohen Motordrehzahlbereich und demzufolge bei hohen Schmiermitteldrücken reduziert das Steuerteil in der dritten Stellung den Öffnungsquerschnitt, so dass ein zu hoher Öldurchsatz vermieden wird, um Stauungen im Kolbenkühlkanal zu vermeiden. Der Öldurchsatz ist abhängig von der Größe des gebildeten Öffnungsquerschnitts und dem Schmiermitteldruck.

Gemäß einer bevorzugten Ausführungsform der Erfindung ist das Steuerteil kontinuierlich zwischen der ersten, zweiten und dritten Stellung bewegbar, und das Stellteil ist eingerichtet, die Stellung des Steuerteils und damit den Öffnungsquerschnitt so einzustellen, dass eine Steigung eines Schmiermitteldurchsatzes in einem oberen Druckbereich des Schmiermittels im Vergleich zu einem mittleren Druckbereich kleiner ist. Dadurch wird eine zu starke Zunahme des Schmiermitteldurchsatzes aufgrund des hohen Druckes vermieden. Die Steigung eines Schmiermitteldurchsatzes ist die Steigung des Verlaufes des Schmiermitteldurchsatzes durch das Steuerventil in Abhängigkeit von der Motordrehzahl bzw. in Abhängigkeit von dem Schmiermitteldruck am Ventileingang. Beispielsweise kann durch experimentelle Versuche die optimale Verlaufskurve des Schmiermitteldurchsatzes in Abhängigkeit des Schmiermitteldruckes in einem oberen Druckbereich ermittelt werden, die eine ausreichende Kolbenkühlung ermöglicht und gleichzeitig das Auftreten von Staueffekten vermeidet. Das Stellteil und das Steuerteil, sowie die Durchtrittsöffnung können dann entsprechend ausgelegt werden, damit der Schmiermitteldurchsatz gemäß der optimalen Verlaufskurve durch das Steuerventil gesteuert wird.

Besonders vorteilhaft ist es, die Stellung des Steuerteils und damit den Öffnungsquerschnitt so einzustellen, dass in einem oberen Druckbereich des Schmiermittels ein im Wesentlichen konstanter Schmiermitteldurchsatz durch die Durchtrittsöffnung erfolgt. Dies beruht auf der Feststellung der Erfinder, dass ein derartiger Verlauf eine optimale Kolbenkühlung ermöglicht und Staueffekte wirksam vermeidet. Ein konstanter Schmiermitteldurchsatz kann durch eine entsprechende Auslegung und Abstimmung des Steuerventils erfolgen. Hierzu wird die Verkleinerung des Durchsatzes des Kühlmittels mit zunehmenden Schmiermitteldruck durch eine Verkleinerung des Öffnungsquerschnitts so eingestellt, dass dadurch die Erhöhung des Durchsatzes des Kühlmittels pro Flächeneinheit resultierend aus dem zunehmenden Druck kompensiert wird.

Gemäß einer bevorzugten Ausgestaltungsform wirkt die durch das Schmiermittel auf das Steuerteil über eine Wirkfläche des Steuerteils wirkende Druckkraft zumindest im Wesentlichen in Richtung einer der Bewegungsrichtungen des Steuerteils auf dieses. Insbesondere wirkt die Druckkraft in die Bewegungsrichtung, in welche das Steuerteil zu bewegen ist, um die Durchtrittsöffnung des Steuerventils teilweise oder ganz freizugeben. Dann ist die Durchtrittsöffnung und damit das Steuerventil durch die Einstellung eines bestimmten Drucks des Schmiermittels offenbar. Die auf das Steuerteil wirkende Druckkraft bewegt dann das Steuerteil, wenn eine entgegengesetzte, durch das Stellteil auf das Steuerteil aufgebrachte Kraft, insbesondere Vorspannkraft, überwunden ist. Vorzugsweise nimmt somit ein Stellweg des Steuerteils mit zunehmender Druckkraft des Schmiermittels zu.

Vorzugsweise ist das Steuerteil als Kolben ausgebildet und innerhalb einer zylinderförmigen Ausnehmung eines Steuerventilgehäuses geführt, beispielsweise in einer Gleitbuchse, wobei die Durchlassöffnung in der zylinderförmigen Führungsfläche der Ausnehmung für das Steuerteil vorgesehen ist. Die Ausbildung als Kolben gewährleistet eine einfache und relativ reibungsverminderte Führung für das Steuerteil. Zudem sind die Anschlagflächen, die die Steuerbewegung des Steuerteils beschränken, einfach zu realisieren.

Bei einer vorteilhaften Variante dieser Ausgestaltungsform weist der Kolben in seinem Kolbenmantel eine von Schmiermittel durchströmbare Öffnung, insbesondere eine Radialöffnung auf, die einerseits über einen Kolbeninnenraum mit dem Schmiermittelzulauf kommuni-zierend verbunden ist, und andererseits in einem vorbestimmten Stellungsbereich des Kolbens eine kommunizierende Verbindung mit der Durchgangsöffnung ausbildet, wobei der Öffnungsquerschnitt aus einer Überlappung der Durchlassöffnung und der Radialöffnung gebildet ist. Eine Möglichkeit der erfindungsgemäßen Realisierung sieht ferner vor, dass der Kolben mit zunehmenden Druck des Schmiermittels gegen das Stellteil bewegt wird, so dass die Überlappung von der ersten bis zu zweiten Stellung zunimmt und anschließend von der zweiten bis zur dritten Stellung wieder abnimmt.

Ein besonderer Vorzug dieser Ausführungsform liegt somit darin, dass mit einer einzigen linearen Verfahrbewegung des Steuerteils ein schrittweise zunehmender und ein schrittweise abnehmender Öffnungsquerschnitt zwischen Steuerteil und Durchlassöffnung ausgebildet werden kann.

Vorzugsweise ist das Stellteil als Federelement ausgebildet ist, mittels welchem das Steuerteil unter Federkraftbeaufschlagung durch das Federelement in die verschiedenen Stellungen bewegbar ist. Beispielsweise kann das Federelement als Spiral- oder als Blattfeder ausgebildet sein. Dies hat den Vorteil, dass ein robustes und kostengünstiges Steuerventil mit einem einfachen Aufbau, einem geringen Bauraumbedarf und einem mechanischen Stellmechanismus bereitgestellt werden kann.

Bei dieser Ausführungsvariante ist der Öl-Durchsatz unter anderem abhängig von der Federkennline und der druckabhängigen Öffnungsquerschnittsfreigabe. Durch Abstimmung der Federkennlinie bzw. der Federcharakteristik sowie der Größe der Durchlassöffnung und Radialöffnung kann das Steuerventil auf konstruktiv einfache Weise an den motorspezifischen Kühlölmengenbedarf angepasst werden.

Vorzugsweise ist die Durchtrittsöffnung durch einen Ringkanal oder eine Ringnut ausgebildet, der oder die in ein Steuerventilgehäuse und in ein weiteres Bauteil, beispielsweise einer Gleitbuchse oder zylinderförmigen Führung für das Steuerteil, eingebracht ist.

Ein weiterer Aspekt der Erfindung betrifft eine Schmiermittelversorgungseinrichtung für eine Hubkolbenmaschine eines Kraftfahrzeugs, insbesondere eines Nutzfahrzeugs, mit zumindest einer Schmiermittelspritzdüse, insbesondere einer Ölspritzdüse, über welche zumindest ein Kolben der Hubkolbenmaschine mit Schmiermittel zu bespritzen ist, und zumindest einen Schmiermittelzulauf, über welchen der Schmiermittelspritzdüse das Schmiermittel zuführbar ist, wobei in Strömungsrichtung des Schmiermittels zu der Schmiermittelspritzdüse stromauf dieser ein Steuerventil nach einem der vorstehend beschriebenen Aspekte angeordnet ist, mittels welchem eine Menge des der Schmiermittelspritzdüse zuzuführenden Schmiermittels einstellbar ist. Vorteilhafterweise ist jedem Kolben der Hubkolbenmaschine zumindest eine Schmiermittelspritzdüse zugeordnet.

Eine Möglichkeit der erfindungsgemäßen Realisierung sieht vor, dass die Schmiermittelversorgungseinrichtung eine Mehrzahl von Schmiermittelspritzdüsen aufweist, wobei ein separates Steuerventil gemäß der vorstehend beschriebenen Aspekte stromauf zu jeder Schmiermittelspritzdüse angeordnet ist, mittels welchem eine Menge des der Schmiermittelspritzdüse zuzuführenden Schmiermittels einstellbar ist. Die Steuerventile sind somit dezentral verbaut.

Alternativ kann auch ein zentrales Steuerventil gemäß der vorstehend beschriebenen Aspekte vorgesehen sein, das in einer Schmiermittelgalerie angeordnet ist, um die Menge des zuzuführenden Schmiermittels zentral für alle Schmiermittelspritzdüsen einzustellen.

Ein weitere Aspekt der Erfindung betrifft ein Kraftfahrzeug, insbesondere Nutzfahrzeug oder einen Verbrennungsmotor mit einem Steuerventil und/oder einer Schmiermittelversorgungseinrichtung nach einem der vorstehend beschriebenen Aspekte.

Grundsätzlich wird in der beschriebenen Lehre das Motorkühlsystem und damit auch die Ölspitzdüse von einer an die Motordrehzahl gekoppelten Konstantförderpumpe gespeist. Damit besteht eine direkte Abhängigkeit zwischen der Motordrehzahl und der Förderpumpenleistung. Insbesondere im Fall der Konstantföderpumpe ist die beschriebene Auslegung, wonach im oberen Drehzahlbereich der Kolben die Querschnittsöffnung wieder sukzessive verringert, derart, dass ein im Wesentlichen konstanter Schmiermitteldurchsatz durch die Durchtrittsöffnung erfolgt, vorteilhaft.

Alternativ zu einer an die Motordrehzahl gekoppelten Konstantförderpumpe kann auch eine bedarfsgeregelte Ölpumpe eingesetzt werden, beispielsweise eine elektrisch, pneumatisch oder hydraulisch ansteuerbare regelbare Ölpumpe. Durch den Einsatz der Erfindung wird prinzipiell der Kühlölbedarf der Kolben und damit auch die Versorgung anderer im Ölkreislauf befindlicher Verbraucher gesteuert/beeinflusst. Beispielsweise kann bei höherer Motordrehzahl und der Reduzierung des Schmiermitteldurchsatzes an der Durchtrittsöffnung eine geringere Kühlwirkung an den Kolben und eine erhöhte Schmierung und/oder Kühlung anderer Motorbereiche erwirkt werden. Insgesamt kann eine Beeinflussung einer relativen Ölversorgung des/der Kolben und anderer Motorbereiche indirekt durch Öldruckveränderung mittels der bedarfsgeregelten Ölpumpe erreicht werden. Ferner ist es durch das Steuerventil möglich, ein konträres Verhalten zwischen dem eingeregelten Öldruck und dem erforderlichen Kühlölbedarf auszugleichen.

Weitere Einzelheiten und Vorteile der Erfindung werden im Folgenden unter Bezug auf die beigefügten Zeichnungen beschrieben. Es zeigen:
- Figur 1: eine Schnittansicht eines Steuerventils für eine Ölspritzdüse gemäß einem Ausführungsbeispiel;
- Figuren 2A-2E: schematisch verschiedene Öffnungsquerschnitte abhängig von der Kolbenstellung gemäß einem Ausführungsbeispiel;
- Figur 3: ein Verlaufsdiagram, dass den Öldurchsatz in Abhängigkeit der Motordrehzahl für verschiedene Ölspritzdüsen zeigt; und
- Figuren 4A und 4B: Schmiermittelversorgungseinrichtungen mit dezentralen und zentralen Verbau der Steuerventile gemäß einem Ausführungsbeispiel.

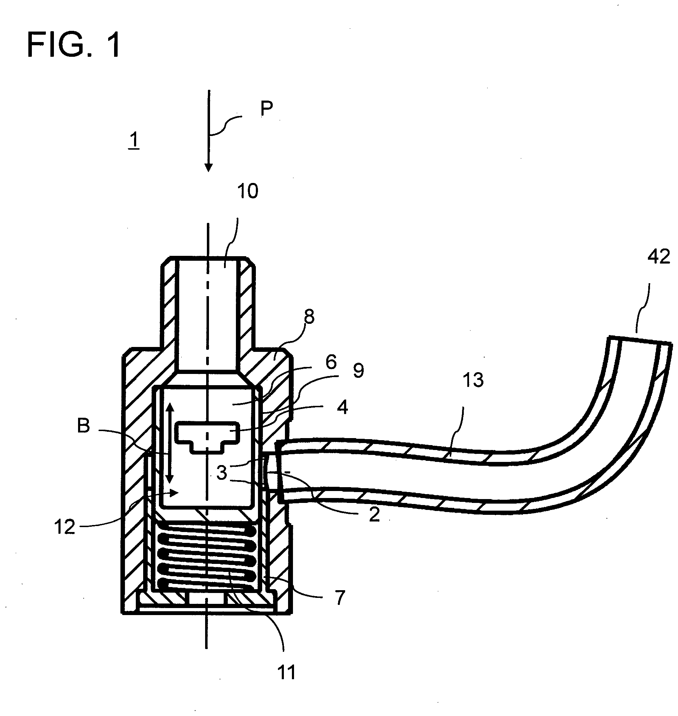

Die Fig.1. zeigt ein Steuerventil 1, welches in einem Ölkanal einer Verbrennungskraftmaschine anzuordnen und einer Ölspritzdüse vorzuschalten ist. Mit dem Steuerventil 1 ist dabei der Ölkanal bedarfsgerecht offen- und schließbar und somit der Ölspritzdüse bedarfsgerecht Schmieröl zuführbar. Mittels der Ölspritzdüse ist ein der Ölspritzdüse zugeordneter Kolben der als Hubkolbenmaschine ausgebildeten Verbrennungskraftmaschine mit dem den Ölkanal durchströmenden Schmieröl bespritzbar und somit zu kühlen.

Das Steuerventil 1 umfasst ein Ventilgehäuse 8 und ein Steuerteil, das als Ventilkolben 6 ausgebildet ist. Der Ventilkolben 6 ist in dem Ventilgehäuse 8 in der mit dem Pfeil B gekennzeichneten Richtung beweglich gelagert und mittels einem Stellteil in einer Schließstellung vorgespannt. Dabei ist das Stellteil 11 beispielsweise als Federelement 11, insbesondere als Schrauben-, Spiral- oder als Blattfeder ausgebildet.

In dem Ventilgehäuse 8 ist ferner eine von Schmiermittel durchströmbare Durchtrittsöffnung 2 vorgesehen, über die aus dem Steuerventil 1 austretendes Öl beispielsweise über Zuführleitung 13 an die Ölspritzdüse 42 weitergeleitet werden kann. Die Durchtrittsöffnung ist als Ringkanal bzw. Ringnut ausgebildet, und wird durch obere und untere Öffnungskanten 3 begrenzt.

Das Steuerventil 1 umfasst ferner eine in dem Steuerventilgehäuse 8 aufgenommene Gleitbuchse 7, mittels welcher der Kolben 6 geführt ist. Die Durchtrittsöffnung 2 ist dabei in der Gleitbuchse 7 angeordnet. Die Führung sowie die relative Bewegbarkeit des Kolbens 6 zu der Gleitbuchse 7 gewährleistet eine sichere und verklemmungsfreie Bewegung des Kolbens 6 und damit eine hohe Funktionserfüllungssicherheit des Steuerventils 1. Die Gleitbuchse 7 und/oder der Kolben 6 können dabei beispielsweise aus einem gehärteten Material gefertigt und in das Gehäuse 8 des Steuerventils 1 eingesetzt sein.

Mit seiner offenen Seite ist dabei der Ventilkolben 6, der einen U-förmigen Querschnitt aufweist, dem Schmiermittelzulauf 10 zugewandt. In seinem Kolbenmantel 9 weist der Ventilkolben 6 eine von Schmiermittel durchströmbare Radialöffnung 4 auf, die einerseits über einen Kolbeninnenraum 12 mit dem Schmiermittelzulauf 10 kommunizierend verbunden ist, und andererseits in einem vorbestimmten Stellungsbereich des Kolbens 6 eine kommunizierende Verbindung mit der Durchgangsöffnung 2 ausbildet. In diesem vorbestimmten Stellungsbereich kann über den Schmiermittelzulauf 10 in das Kolbeninnenvolumen 12 geströmte Schmiermittel über die Radialöffnung 4 und die Durchtrittsöffnung 2 aus dem Steuerventil austreten und über die Schmiermittelleitung 13 der Ölspritzdüse zugeführt werden. Dies wird nachfolgend noch detaillierter erläutert.

Wie durch den Richtungspfeil P in Fig. 1. illustriert, übt das über den Schmiermittelzulauf 10 eintreffende, unter Druck stehende Schmieröl auf den Kolben 6 eine Druckkraft aus, welche in die axiale Bewegungsrichtung B des Kolbens 6 gerichtet ist, in welche der Kolben 6 zum Öffnen oder Verschließen der Durchtrittsöffnung 2 und damit des Ölkanals bewegt wird. Mittels geeigneter Voreinstellung der auf den Kolben 6 durch die Feder 11 wirkenden Vorspannkraft, beispielsweise durch Abstimmung der Federkennlinie, kann erreicht werden, dass das Steuerventil 1 und damit der Schmiermittelkanal bei einem bestimmten Druck des Schmieröls geöffnet und ggf. auch geschlossen wird.

Der Kolben 6 wird mit zunehmenden Druck des Schmiermittels gegen die Feder 11 bewegt, derart, so dass die Radialöffnung 4 an der Durchlassöffnung 2 vorbei verfahren wird. Je nach Stellung des Kolbens bildet sich abhängig von der Überlappung der Durchlassöffnung 2 und der Radialöffnung 4 ein unterschiedlich großer Öffnungsquerschnitt, über den das Schmiermittel aus dem Steuerventil 1 austreten kann. Insbesondere kann in hohen Druckbereichen des Schmiermittels der Kolben so weit verfahren werden, dass die Überlappung und damit der Öffnungsquerschnitt wieder kleiner wird.

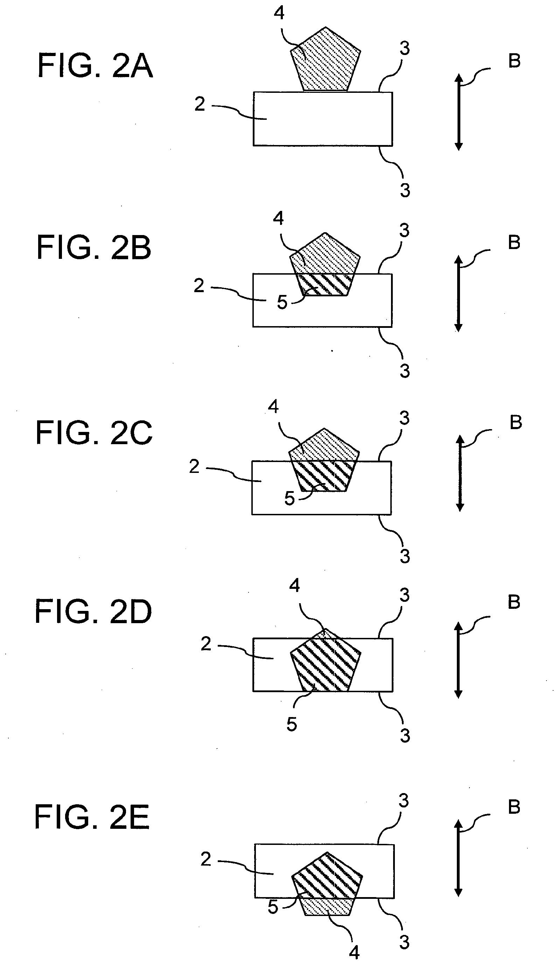

Dies wird nachfolgend anhand der Figuren 2A bis 2E näher erläutert.

Die Figuren 2A-2E illustrieren schematisch verschiedene Öffnungsquerschnitte abhängig von der Kolbenstellung gemäß einem Ausführungsbeispiel, um die Funktionsweise des Steuerungsventils 1 zu verdeutlichen. Zur Vereinfachung der Darstellung sind in den Figuren 2A-2E jeweils nur die Radialöffnung 4 und die Durchtrittsöffnung 2 des Steuerventils 1 dargestellt. Im vorliegenden Ausführungsbeispiel hat die Radialöffnung 4 einen fünfeckigen Querschnitt. Die Radialöffnung kann aber auch einen beliebigen anderen Querschnitt aufweisen. Zur Vereinfachung der Darstellung ist die als Ringnut ausgebildete Durchlassöffnung 2 als in der Zeichenebene "abgewickelt" dargestellt.

Die Figur 2A illustriert eine erste Stellung des Kolbens 6, bei einer Leerlaufdrehzahl oder in einem unteren Drehzahlbereich, wo kein oder nur ein geringen Kühlölbedarf besteht. In diesem Fall übt das über den Schmiermittelzulauf 10 eintreffende, unter Druck stehende Schmieröl auf den Kolben 6 eine geringe Druckkraft aus, welche die Vorspannkraft der Feder 11 nicht überwindet. Der Kolben 6 und und Radialöffnung 4 sind daher in einer oberen Verschließstellung angeordnet, in der keine Überlappung zwischen der Radialöffnung 4 und der Durchlassöffnung besteht, so dass der Kolbenmantel 9 die Durchtrittsöffnung 2 verschließt.

Mit zunehmender Motordrehzahl erhöht sich der Schmiermitteldruck und damit die Druckkraft, die auf den Kolben 6 ausgeübt wird. Die Figur 2B illustriert einen Zustand des Steuerventils 1 mit einem im Vergleich zur Figur 2A erhöhten Motordrehzahlbereich, bei dem die auf den Kolben 6 wirkende Druckkraft des Schmiermittels größer ist als die durch die Feder 11 auf den Kolben 6 wirkende Vorspannkraft. In diesem Zustand ist die Feder 11 etwas zusammengedrückt und der Kolben 6 etwas nach unten in der Gleitbuchse 7 entlang der Bewegungsrichtung B verfahren, so dass die Radialöffnung 4 die obere Öffnungskante 3 der Durchlassöffnung überschreitet. Der Überlappungsbereich zwischen der Radialöffnung 4 und der Durchlassöffnung 2 bildet einen Öffnungsquerschnitt 5 aus, gekennzeichnet durch die Schraffur mit den dicken Linien. Wird die auf den Kolben 6 wirkende Druckkraft wieder geringer als die durch die Feder 11 auf den Kolben 6 wirkende Vorspannkraft, so wird der Kolben 6 mittels der Feder 11 wieder in eine die Durchlassöffnung 2 fluidisch verschließende oder teilweise verschließende Stellung der Figur 2A zurückbewegt.

Die Figuren 2C-2E illustrieren Kolbenstellungen bei zunehmend höheren Motordrehzahlen bzw. Schmiermitteldrücken, so dass die zunehmende Druckkraft des Schmiermittels die Feder 11 zunehmend zusammenpresst. Hierbei wird die Radialöffnung 4 des Kolbens 6 an der Durchlassöffnung 2 vorbeiverfahren, so dass die Überlappung 5 erst zunimmt und dabei in einem vorbestimmten Motordrehzahlbereich ihr Maximum erreicht, was in Figur 2D dargestellt ist.

Ein besonderer Vorzug der Erfindung liegt darin, dass der Kolben 6 bei hohen Schmiermitteldrücken in eine Stellung verfahren wird, in der die Radialöffnung 5 über die untere Öffnungskante 3 der Durchlassöffnung hinaustritt und der Überlappungsbereich zwischen der Radialöffnung 4 und der Durchlassöffnung 2 wieder abnimmt, so dass der Öffnungsquerschnitt 5 wieder kleiner wird. Dies ist in der Figur 2E dargestellt. Dadurch kann ein zu starker Anstieg der Kühlölmenge verhindert werden.

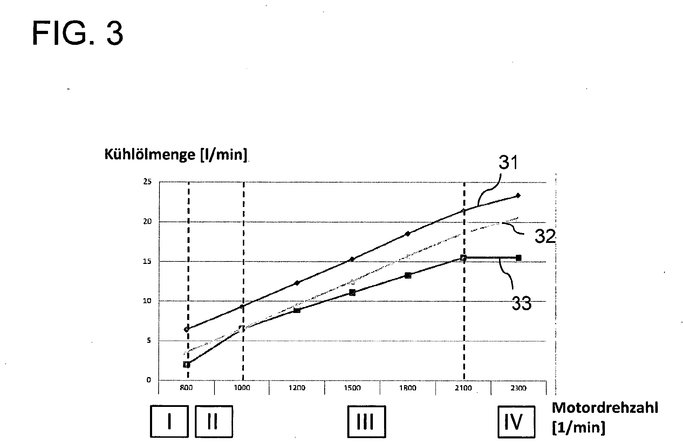

Dies ist beispielhaft anhand dem Diagramm der Figur 3 erläutert, das den Öldurchsatz in Abhängigkeit der Motordrehzahl für verschiedene Ölspritzdüsen zeigt. Die Kurven 31 und 32 zeigen jeweils den motordrehzahlabhängigen Öldurchsatz für eine herkömmliche ungeregelte Ölspritzdüse und eine optimierte ungeregelte Ölspritzdüse. Die Kurve 33 zeigt den motordrehzahlabhängigen Öldurchsatz für eine mit dem Steuerventil 1 gesteuerte Ölspritzdüse.

Der Bereich I zeigt den Öldurchsatz bei Leerlaufdrehzahl, wo der Kolben 6 des Steuerventils 1 in einer die Durchtrittsöffnung 2 verschließenden Stellung ist (siehe auch Figur 2A), so dass ausreichend Öl für Motorschmierstellen zur Verfügung steht.

Im unteren Drehzahlbereich (Bereich II, siehe auch Figur 2B) besteht ein geringer Kühlölbedarf, so dass ein kleiner Öffnungsquerschnitt 5 freigeben wird. Im mittleren Drehzahlbereich III (siehe auch die Figuren 2C und 2D) wird der Öffnungsquerschnitt 5 durch den steigenden Öldruck zunehmend vergrößert, bis hin zu einem maximalen Öffnungsquerschnitt (siehe Figur 2D). Die Kurve 33 zeigt somit im Bereich III einen ansteigenden Verlauf.

Im oberen Drehzahlbereich IV (siehe auch Figur 2E) wird durch weiteres Verfahren des Kolbens 6 der Öffnungsquerschnitt 5 wieder sukzessive verringert, derart, dass ein im Wesentlichen konstanter Schmiermitteldurchsatz durch die Durchtrittsöffnung 2 erfolgt, was durch den konstanten Verlauf der Kurve 33 im Bereich IV dargestellt ist.

Im Gegensatz zu den Kurven 31 und 32 kann somit ein zu starker Anstieg des Schmiermitteldurchsatzes im oberen Dreh- bzw. Druckbereich vermieden werden.

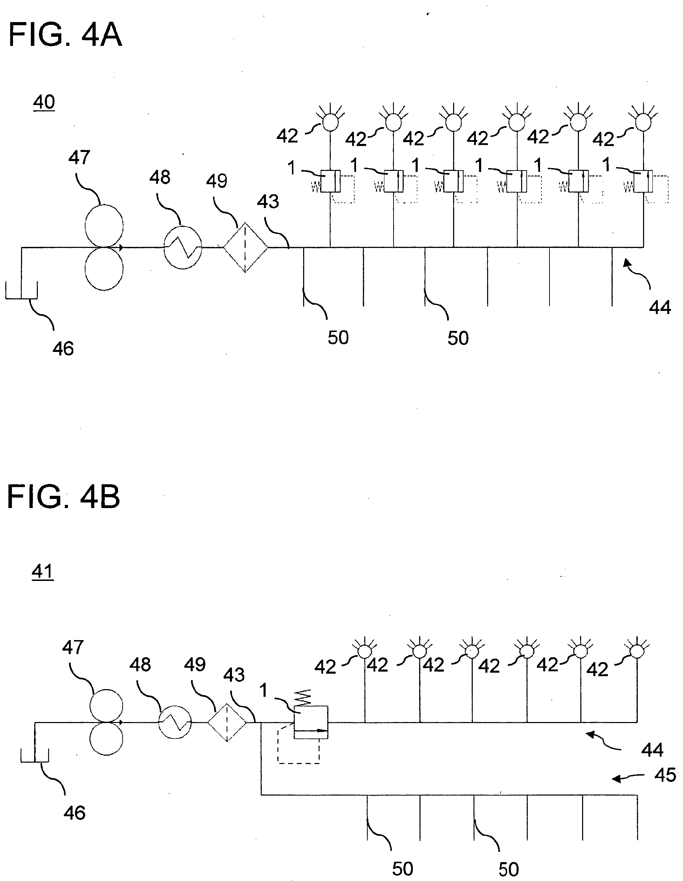

Die Figuren 4A und 4B zeigen eine Schmiermittelversorgungseinrichtungen 40, 41 mit dezentralen und zentralen Verbau der Steuerventile 1.

Gemäß der in Figur 4A gezeigten dezentralen Anordnung der Steuerventile 1 ist ein separates Steuerventil 1 für jede Ölspritzdüse angeordnet, um die Menge des der Schmiermittelspritzdüse 42 zuzuführenden Schmiermittels einzustellen.

Eine Konstantförderpumpe 47, die mit der Drehzahl des Motors (nicht gezeigt) gekoppelt ist, fördert das Schmiermittel über eine Schmiermittelleitung 43 aus einem Ölsumpf 46. Stromab zur Konstantförderpumpe 47 ist ein Wärmetauscher 48, um überschüssige Wärme aus dem Öl abzuführen, und ein Filter 49 angeordnet. Das aus dem Filter 49 austretende Öl wird über eine Ölgalerie 44 den einzelnen Ölspritzdüsen 42 über die Steuerventile 1 und den ölhydraulischen Verbrauchern 50 zugeführt.

Wie in der Schmiermittelversorgungseinrichtung 42 der Figur 4B gezeigt, ist auch eine zentrale Anordnung eines Steuerventils 1 für eine Vielzahl von Ölspritzdüsen 42 möglich. Hierzu ist zur Versorgung der Verbraucher 50 eine von der Ölgalerie 44 für die Ölspritzdüsen 42 getrennten Ölgalerie 45 vorgesehen, die stromauf des zentralen Steuerventils 1 mit Öl versorgt wird.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Zusätzlich können viele Modifikationen ausgeführt werden, um das Steuerventil an den motorspezifischen Kühlölmengenbedarf anzupassen. Folglich soll die Erfindung nicht auf das offenbarte bestimmte Ausführungsbeispiel begrenzt sein, sondern die Erfindung soll alle Ausführungsbeispiele umfassen, die in den Bereich der beigefügten Patentansprüche fallen.

## Patentansprüche

1. Steuerventil (1) für eine Schmiermitteldüse, insbesondere eine Ölspritzdüse, zum Kühlen eines Kolbens einer Verbrennungskraftmaschine, mit
wenigstens einer von Schmiermittel durchströmbaren Durchtrittsöffnung (2);
einem in eine jeweilige Bewegungsrichtung bewegbaren Steuerteil, das in Abhängigkeit seiner Stellung einen Öffnungsquerschnitt (5) mit der Durchtrittsöffnung (2) zur zumindest bereichsweisen Freigabe bzw. zur Verschließung der Durchtrittsöffnung (2) bildet;
einem Stellteil, mittels welchem das Steuerteil in Abhängigkeit von einem Druck des Schmiermittels zwischen zumindest einer ersten Stellung bei einem erstem Druck, einer zweiten Stellung bei einem zweiten Druck und einer dritten Stellung bei einem dritten Druck des Schmiermittels bewegbar ist, wobei der zweite Druck größer als der erste Druck und kleiner als der dritte Druck ist und der in der zweiten Stellung gebildete Öffnungsquerschnitt (5) größer ist als die Öffnungsquerschnitte (5) in der ersten Stellung und der dritten Stellung, wobei das Steuerteil kontinuierlich zwischen der ersten, zweiten und dritten Stellung bewegbar ist und
**dadurch gekennzeichnet, dass** das Stellteil eingerichtet ist, die Stellung des Steuerteils und damit den Öffnungsquerschnitt (5) so einzustellen, dass in einem oberen Druckbereich des Schmiermittels ein konstanter Schmiermitteldurchsatz durch die Durchtrittsöffnung (2) erfolgt, wobei eine Verkleinerung des Schmiermitteldurchsatzes mit zunehmendem Schmiermitteldruck durch eine Verkleinerung des Öffnungsquerschnitts so eingestellt ist, dass dadurch eine Erhöhung des Schmiermitteldurchsatzes pro Flächeneinheit resultierend aus dem zunehmenden Schmiermitteldruck kompensiert wird, um den konstanten Schmiermitteldurchsatz in dem oberen Druckbereich beizubehalten.

2. Steuerventil (1) nach Anspruch 1, **dadurch gekennzeichnet, dass** der Öffnungsquerschnitt (5) in einem Bereich mittleren Druckes des Schmiermittels maximal ist.

3. Steuerventil (1) nach Anspruch 1 oder 2, **dadurch gekennzeichnet, dass** das Stellteil eingerichtet ist, die Stellung des Steuerteils und damit den Öffnungsquerschnitt (5) so einzustellen, dass eine Steigung eines Schmiermitteldurchsatzes in einem oberen Druckbereich des Schmiermittels kleiner ist als in einem mittleren Druckbereich.

4. Steuerventil (1) nach einem der vorhergehenden Ansprüche, **dadurch gekennzeichnet, dass** die durch das Schmiermittel auf das Steuerteil wirkende Druckkraft (P) zumindest im Wesentlichen in Richtung (B) einer der Bewegungsrichtungen des Steuerteils auf dieses wirkt.

5. Steuerventil (1) nach einem der vorhergehenden Ansprüche, **dadurch gekennzeichnet, dass** das Steuerteil als Kolben (6) ausgebildet und innerhalb einer Gleitbuchse (7) eines Steuerventilgehäuses (8) geführt ist, wobei die Durchlassöffnung (2) in der Gleitbuchse (7) vorgesehen ist.

6. Steuerventil (1) nach Anspruch 5, **dadurch gekennzeichnet, dass** der Kolben (6) in seinem Kolbenmantel (9) eine von Schmiermittel durchströmbare Radialöffnung (4) aufweist, die einerseits über einen Kolbeninnenraum mit einem Schmiermittelzulauf (10) kommunizierend verbunden ist, und andererseits in einem vorbestimmten Stellungsbereich des Kolbens (6) eine kommunizierende Verbindung mit der Durchgangsöffnung (2) ausbildet, wobei der Öffnungsquerschnitt (5) aus einer Überlappung der Durchlassöffnung (2) und der Radialöffnung (4) gebildet wird.

7. Steuerventil (1) nach Anspruch 6, **dadurch gekennzeichnet, dass** der Kolben (6) mit zunehmenden Druck des Schmiermittels gegen das Stellteil bewegt wird, derart, dass die Radialöffnung (4) an der Durchlassöffnung (2) vorbeiverfahren wird, so dass die Überlappung (5) von der ersten bis zu zweiten Stellung zunimmt und anschließend von der zweiten bis zur dritten Stellung wieder abnimmt.

8. Steuerventil (1) nach einem der vorhergehenden Ansprüche, **dadurch gekennzeichnet, dass** das Stellteil als Federelement (11) ausgebildet ist, mittels welchem das Steuerteil unter Federkraftbeaufschlagung durch das Federelement (11) in eine der Stellungen bewegbar ist.

9. Steuerventil (1) nach einem der vorhergehenden Ansprüche, **dadurch gekennzeichnet, dass** die Durchtrittsöffnung (2) durch einen Ringkanal oder eine Ringnut ausgebildet ist, der oder die in ein Steuerventilgehäuse (8) und ein weiteres Bauteil eingebracht ist.

10. Schmiermittelspritzdüse, insbesondere einer Ölspritzdüse (42), umfassend ein Steuerventil (1) nach einem der vorhergehenden Ansprüche 1 bis 9.

11. Schmiermittelversorgungseinrichtung (40, 41) für eine Hubkolbenmaschine eines Kraftfahrzeugs, insbesondere eines Nutzfahrzeugs, mit zumindest einer Schmiermittelspritzdüse, insbesondere einer Ölspritzdüse (42), über welche zumindest ein Kolben der Hubkolbenmaschine mit Schmiermittel zu bespritzen ist, und zumindest einen Schmiermittelzulauf (43), über welchen der Schmiermittelspritzdüse (42) das Schmiermittel zuführbar ist, **dadurch gekennzeichnet, dass** in Strömungsrichtung des Schmiermittels zu der Schmiermittelspritzdüse (42) stromauf dieser ein Steuerventil (1) nach einem der vorhergehenden Ansprüche 1 bis 9 angeordnet ist, mittels welchem eine Menge des der Schmiermittelspritzdüse (42) zuzuführenden Schmiermittels einstellbar ist.

12. Schmiermittelversorgungseinrichtung (40) nach Anspruch 11 mit einer Mehrzahl von Schmiermittelspritzdüsen (42), **dadurch gekennzeichnet, dass** ein separates Steuerventil (1) nach einem der vorhergehenden Ansprüche 1 bis 9 stromauf zu jeder Schmiermittelspritzdüse (42) angeordnet ist, um die Menge zuführenden Schmiermittels für jeweils eine der Schmiermittelspritzdüsen (42) einzustellen.

13. Schmiermittelversorgungseinrichtung (41) nach Anspruch 11 mit einer Mehrzahl von Schmiermittelspritzdüsen (42), **dadurch gekennzeichnet, dass** ein zentrales Steuerventil (1) nach einem der vorhergehenden Ansprüche 1 bis 9 in einer Schmiermittelgalerie (44) angeordnet ist, um die Menge zuführenden Schmiermittels für alle Schmiermittelspritzdüsen (42) einzustellen.

14. Kraftfahrzeug, insbesondere Nutzfahrzeug mit einem Steuerventil (1) nach einem der vorhergehenden Ansprüche 1 bis 9 und/oder mit einer Schmiermittelspritzdüse nach Anspruch 10 und/oder mit einer Schmiermittelversorgungseinrichtung (40, 41) nach einem der Ansprüche 11 bis 12.

## Claims

1. Control valve (1) for a lubricant nozzle, in particular an oil spray nozzle, for cooling a piston of an internal combustion engine, having
at least one passage opening (2) through which lubricant can flow;
a control part which is movable in a respective movement direction and which, as a function of its position, forms an opening cross section (5) with the passage opening (2) for at least partially opening up or for closing off the passage opening (2) ;
an actuation part by means of which the control part can, as a function of a pressure of the lubricant, be moved between at least one first position in the presence of a first pressure, a second position in the presence of a second pressure and a third position in the presence of a third pressure of the lubricant, wherein the second pressure is higher than the first pressure and lower than the third pressure and the opening cross section (5) formed in the second position is larger than the opening cross sections (5) in the first position and in the third position, wherein the control part is movable in continuous fashion between the first, second and third positions, and
**characterized in that** the actuation part is designed to set the position of the control part, and thus the opening cross section (5), such that a constant lubricant throughput through the passage opening (2) is realized in an upper pressure range of the lubricant, wherein a reduction in lubricant throughput with increasing lubricant pressure by means of a decrease in size of the opening cross section is set such that, in this way, an increase in lubricant throughput per unit of surface area as a result of the increasing lubricant pressure is compensated, in order to maintain the constant lubricant throughput in the upper pressure range.

2. Control valve (1) according to Claim 1, **characterized in that** the opening cross section (5) is at a maximum in a range of medium pressure of the lubricant.

3. Control valve (1) according to Claim 1 or 2, **characterized in that** the actuation part is designed to set the position of the control part, and thus the opening cross section (5), such that a gradient of a lubricant throughput is smaller in an upper pressure range of the lubricant than in a medium pressure range.

4. Control valve (1) according to one of the preceding claims, **characterized in that** the pressure force (P) exerted by the lubricant on the control part acts on the control part at least substantially in the direction (B) of one of the movement directions of said control part.

5. Control valve (1) according to one of the preceding claims, **characterized in that** the control part is in the form of a piston (6) and is guided within a sliding bushing (7) of a control valve housing (8), wherein the passage opening (2) is provided in the sliding bushing (7).

6. Control valve (1) according to Claim 5, **characterized in that** the piston (6) has, in its piston skirt (9), a radial opening (4) through which lubricant can flow and which, at one side, is connected in communicating fashion via a piston interior to a lubricant feed (10) and which, at the other side, when the piston (6) is in a predetermined position range, forms a communicating connection to the passage opening (2), wherein the opening cross section (5) is formed from an overlap of the passage opening (2) and of the radial opening (4).

7. Control valve (1) according to Claim 6, **characterized in that**, with increasing pressure of the lubricant, the piston (6) is moved toward the actuation part such that the radial opening (4) is moved past the passage opening (2), such that the overlap (5) increases from the first to the second position and subsequently decreases again from the second to the third position.

8. Control valve (1) according to one of the preceding claims, **characterized in that** the actuation part is in the form of a spring element (11) by means of which the control part can be moved into one of the positions under the action of spring force exerted by the spring element (11).

9. Control valve (1) according to one of the preceding claims, **characterized in that** the passage opening (2) is formed by an annular duct or an annular groove which is introduced into a control valve housing (8) and into a further component.

10. Lubricant spray nozzle, in particular an oil spray nozzle (42), comprising a control valve (1) according to one of the preceding Claims 1 to 9.

11. Lubricant supply device (40, 41) for a reciprocating-piston engine of a motor vehicle, in particular of a utility vehicle, having at least one lubricant spray nozzle, in particular an oil spray nozzle (42), by means of which at least one piston of the reciprocating-piston engine can be sprayed with lubricant, and at least one lubricant feed (43) by means of which the lubricant can be fed to the lubricant spray nozzle (42), **characterized in that** a control valve (1) according to one of the preceding Claims 1 to 9 is arranged upstream of the lubricant spray nozzle (42) as viewed in the flow direction of the lubricant to said lubricant spray nozzle, by means of which control valve a flow rate of the lubricant to be fed to the lubricant spray nozzle (42) can be set.

12. Lubricant supply device (40) according to Claim 11, having a multiplicity of lubricant spray nozzles (42), **characterized in that** a separate control valve (1) according to one of the preceding Claims 1 to 9 is arranged upstream of each lubricant spray nozzle (42) in order that the lubricant flow rate fed is set for each one of the lubricant spray nozzles (42).

13. Lubricant supply device (41) according to Claim 11, having a multiplicity of lubricant spray nozzles (42), **characterized in that** a central control valve (1) according to one of the preceding Claims 1 to 9 is arranged in a lubricant gallery (44) in order that the lubricant flow rate fed is set for all of the lubricant spray nozzles (42).

14. Motor vehicle, in particular utility vehicle, having a control valve (1) according to one of the preceding Claims 1 to 9 and/or having a lubricant spray nozzle according to Claim 10 and/or having a lubricant supply device (40, 41) according to either of Claims 11 and 12.

## Revendications

1. Soupape de commande (1) pour une buse de lubrifiant, en particulier une buse d'injection d'huile pour refroidir un piston d'un moteur à combustion interne, comprenant
au moins une ouverture de passage (2) pouvant être parcourue par du lubrifiant ;
une partie de commande déplaçable dans une direction de déplacement respective qui, en fonction de sa position, forme une section transversale d'ouverture (5) avec l'ouverture de passage (2) pour au moins en partie libérer ou fermer l'ouverture de passage (2) ;
une partie de réglage au moyen de laquelle la partie de commande peut être déplacée en fonction d'une pression de lubrifiant entre au moins une première position à une première pression, une deuxième position à une deuxième pression et une troisième position à une troisième pression de lubrifiant, la deuxième pression étant supérieure à la première pression et étant inférieure à la troisième pression et la section transversale d'ouverture (5) formée dans la deuxième position étant supérieure aux sections transversales d'ouverture (5) dans la première position et la troisième position, la partie de commande pouvant être déplacée en continu entre la première, la deuxième et la troisième position, et
**caractérisée en ce que** la partie de réglage est prévue pour ajuster la position de la partie de commande et par conséquent la section transversale d'ouverture (5) de telle sorte que dans une région de pression supérieure de lubrifiant, un rendement de lubrifiant constant à travers l'ouverture de passage (2) soit produit, une réduction du rendement de lubrifiant avec augmentation de la pression de lubrifiant étant ajustée par une réduction de la section transversale d'ouverture de telle sorte qu'une augmentation du rendement de lubrifiant par unité de surface résultant de l'augmentation de la pression de lubrifiant soit compensée afin de conserver le rendement de lubrifiant constant dans la région de pression supérieure.

2. Soupape de commande (1) selon la revendication 1, **caractérisée en ce que** la section transversale d'ouverture (5) est maximale dans une région de pression moyenne du lubrifiant.

3. Soupape de commande (1) selon la revendication 1 ou 2, **caractérisée en ce que** la partie de réglage est prévue pour ajuster la position de la partie de commande et par conséquent la section transversale d'ouverture (5) de telle sorte que qu'une augmentation d'un débit de lubrifiant dans une région de pression supérieure du lubrifiant soit inférieure au débit de lubrifiant dans une région de pression centrale.

4. Soupape de commande (1) selon l'une quelconque des revendications précédentes, **caractérisée en ce que** la force de pression (P) agissant au moyen du lubrifiant sur la partie de commande agit sur celle-ci au moins essentiellement dans la direction (B) d'une des directions de déplacement de la partie de commande.

5. Soupape de commande (1) selon l'une quelconque des revendications précédentes, **caractérisée en ce que** la partie de commande est réalisée sous forme de piston (6) et est guidée à l'intérieur d'un manchon coulissant (7) d'un boîtier de soupape de commande (8), l'ouverture de passage (2) étant prévue dans le manchon coulissant (7).

6. Soupape de commande (1) selon la revendication 5, **caractérisée en ce que** le piston (6) présente, dans son enveloppe de piston (9), une ouverture radiale (4) pouvant être parcourue par du lubrifiant, laquelle est d'une part connectée par communication par le biais d'un espace interne de piston à une alimentation en lubrifiant (10) et d'autre part constitue dans une région de position prédéterminée du piston (6) une connexion par communication avec l'ouverture de passage (2), la section transversale d'ouverture (5) étant formée à partir d'un chevauchement de l'ouverture de passage (2) et de l'ouverture radiale (4).

7. Soupape de commande (1) selon la revendication 6, **caractérisée en ce que** le piston (6) est déplacé avec une pression croissante du lubrifiant vers la partie de réglage de telle sorte que l'ouverture radiale (4) soit déplacée devant l'ouverture de passage (2) de telle sorte que le chevauchement (5) augmente de la première à la deuxième position et diminue ensuite à nouveau de la deuxième à la troisième position.

8. Soupape de commande (1) selon l'une quelconque des revendications précédentes, **caractérisée en ce que** la partie de réglage est réalisée sous forme d'élément de ressort (11) au moyen duquel la partie de commande peut être déplacée dans l'une des positions par sollicitation par la force de ressort par l'élément de ressort (11).

9. Soupape de commande (1) selon l'une quelconque des revendications précédentes, **caractérisée en ce que** l'ouverture de passage (2) est réalisée par un canal annulaire ou une rainure annulaire qui est pratiqué(e) dans un boîtier de soupape de commande (8) et un composant supplémentaire.

10. Buse d'injection de lubrifiant, en particulier buse d'injection d'huile (42), comprenant une soupape de commande (1) selon l'une quelconque des revendications 1 à 9.

11. Dispositif d'alimentation en lubrifiant (40, 41) pour une machine à piston alternatif d'un véhicule automobile, en particulier d'un véhicule utilitaire, comprenant au moins une buse d'injection de lubrifiant, en particulier une buse d'injection d'huile (42), par le biais de laquelle au moins un piston de la machine à piston alternatif peut être pulvérisé avec du lubrifiant, et au moins une alimentation en lubrifiant (43) par le biais de laquelle la buse d'injection de lubrifiant (42) peut être alimentée en lubrifiant, **caractérisé en ce que** dans la direction d'écoulement du lubrifiant vers la buse d'injection de lubrifiant (42) en amont de celle-ci, est disposée une soupape de commande (1) selon l'une quelconque des revendications précédentes 1 à 9, au moyen de laquelle une quantité de lubrifiant devant être acheminée à la buse d'injection de lubrifiant (42) peut être ajustée.

12. Dispositif d'alimentation en lubrifiant (40) selon la revendication 11, comprenant une pluralité de buses d'injection de lubrifiant (42), **caractérisé en ce qu'**une soupape de commande séparée (1) selon l'une quelconque des revendications précédentes 1 à 9 est disposée en amont de chaque buse d'injection de lubrifiant (42) afin d'ajuster la quantité de lubrifiant à acheminer pour chacune des buses d'injection de lubrifiant (42).

13. Dispositif d'alimentation en lubrifiant (41) selon la revendication 11, comprenant une pluralité de buses d'injection de lubrifiant (42), **caractérisé en ce qu'**une soupape de commande centrale (1) selon l'une quelconque des revendications 1 à 9 est disposée dans une galerie de lubrifiant (44) afin d'ajuster la quantité de lubrifiant acheminé à toutes les buses d'injection de lubrifiant (42).

14. Véhicule automobile, en particulier véhicule utilitaire comprenant une soupape de commande (1) selon l'une quelconque des revendications précédentes 1 à 9 et/ou comprenant une buse d'injection de lubrifiant selon la revendication 10 et/ou comprenant un dispositif d'alimentation en lubrifiant (40, 41) selon l'une quelconque des revendications 11 à 12.
